# EUROPEAN PATENT APPLICATION

(11) **EP 3 328 027 A1**
(43) Date of publication of application: **30.05.2018**
(21) Application number: 16200259.6
(22) Date of filing: 23.11.2016
(51) Int. Cl.: H04L 29/08, H04W 4/00, H04W 4/18

(54) **DEVICE AND METHOD FOR TRANSMITTING DATA**

(71) Applicant: Siemens Aktiengesellschaft, 80333 München (DE)
(72) Inventor: Bröring, Arne, 81541 München (DE); Ziller, Andreas, 82041 Oberhaching (DE)

(57) **Abstract**

The invention relates to a device for transmitting data to a plurality of components, the device having
- a common interface;
- at least one further interface for exchanging data with a first component;
- a processing unit, which is arranged such that
- a transformation of data conformed for the common interface is performed such that the data are adapted for the at least one further interface in regard to syntax and semantics and
- said transformation is performable solely by using a description (D) of the at least one further interface of the first component which comprises
- syntactical information and
- semantical information on the interpretation of the data.

The invention further relates to a corresponding method.

## Description

The invention relates to a device and method for transmitting data.

### Background

Interoperability between different devices, e. g. sensors, computers, or systems thereof often poses challenging problems. This is especially the case if many different devices are present, e. g. in IoT (Internet of Things) systems where a huge variety of different devices, sensors, computers etc. is involved, many of them having different interfaces, but which still should correctly work with another.

Current approaches to solve this problem rely on a standardization of the various interfaces. However, no industrial standard covering all application areas and service types is accepted or spread wide enough to improve the interoperability significantly, still a vast variety of interfaces exists for different devices or/and applications.

It is one object of the invention to offer a possibility to exchange data between devices, in particular in heterogeneous environments.

### Brief summary of the invention

This is solved by what is disclosed in the independent claims. Advantageous embodiments are subject of the dependent claims.

The invention relates to a device for transmitting data to a plurality of components, e.g. in one or more communications network. The device has a common interface, e.g. an interface that is widely used for different types of devices.

Further, it comprises at least one further interface for exchanging data with a first component, e.g. a sensor or computer that can access sensor data or provide data to a sensor.

Further, the device comprises a processing unit, which is arranged such that a transformation of data conformed for the common interface is performed such that the data are adapted for the at least one further interface (IFP) in regard to syntax, e.g. the structure of the data, and semantics, e.g. their meaningful interpretation.

Thereby the transformation is performable solely by using a description of the at least one further interface of the first component (P) which comprises syntactical information and semantical information on the interpretation of the data.

For example, this enhances the possibilities to allow communication between a large number of different components in one or more networks, i.e. components having different communication interfaces, with reasonable effort, because a large part of the components is equipped with a commonly used interface, such as a web interface or an API interface anyway. By adapting only thereto, a lot of work can be saved.

According to an advantageous embodiment the transformation is performed solely by using the description.

The invention further relates to a corresponding method and a corresponding computer program and data carrier.

### Brief description of the drawings

Further embodiments, features and advantages of the present invention will become apparent from the subsequent description and dependent claims, taken in conjunction with the accompanying drawings of which show:
- Figure 1: a schematic overview of an exemplary workflow and the involved components;
- Figure 2: a schematic sequence of an exemplary method.

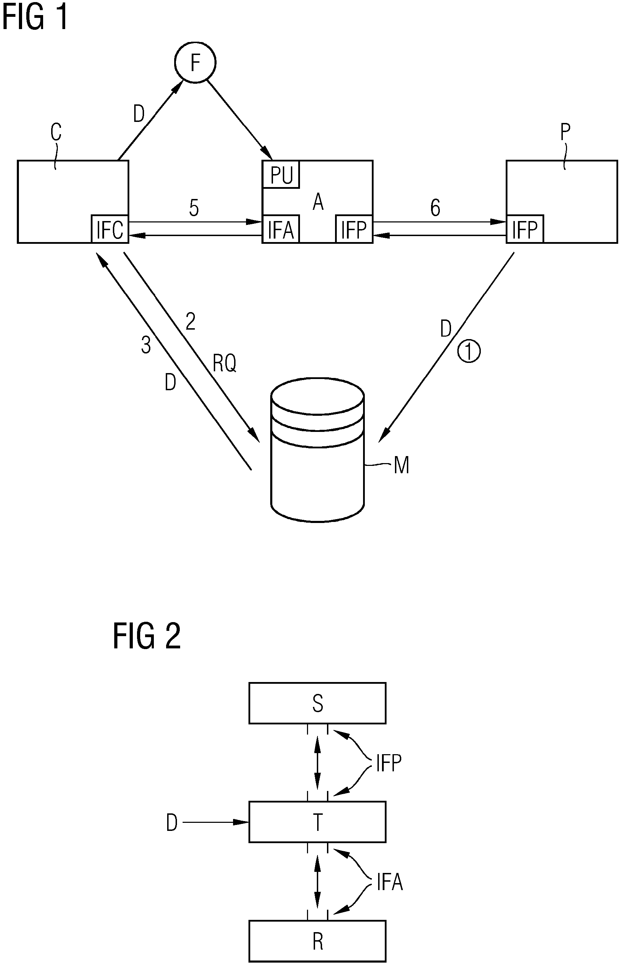

Figure 1 depicts a schematic workflow of the components for realizing a data transmission between a first component P and a second component C.

The first component P can be or comprise any device that can access data, which should be retrievable by another component. Thus, the first component P can be or comprise a sensor, e. g. a temperature sensor, position sensor, light sensor, noise sensor etc., or a device that can access any type of data, in particular sensor data, e.g. a control unit for a sensor.

According to another embodiment the first component P can also be a cloud platform, which manages data retrieved by sensors of other platforms or data retrieved by other platforms.

Alternatively or additionally the first component P can receive data from another device, e.g. such as to perform a temperature measurement at a certain time or to detect the presence of a car at a parking lot in response to a request.

Alternatively or additionally data can be provided by the first component P to another device, e.g. to reserve a parking lot by sending credentials, such as e.g. a number plate or user id, as a data message to an actuator, e.g. a gate or barrier, comprised in or associated with the other device.

The first component P comprises or can access an assigned communication interface IFP, e.g. a proprietary communication interface of a temperature sensor.

The first component P sends in an optional first step 1 a transformation description D to a management unit M.

Alternatively, the transformation description D is stored in the management unit M which acts as a storing unit.

The description D provides a syntactical and semantical description of the communication interface IFP of the first component P in regard to how data are structured and transmitted in respect to a commonly known interface IFA.

Syntactical means that there is a description describing the set of rules that defines combinations of symbols that are considered to be a correctly structured fragment or expression in the language and protocols used on communication interface IFP of the first component P.

Semantical means in this regard that a syntactically correct expression is interpreted in the right way. As an example, the direction of the wind could be provided by indicating the direction from where the wind is coming or the direction where wind is going for the example of a wind measuring unit. As another example, temperature could be provided in degree Fahrenheit, Kelvin or Celsius. Thus a semantical description ensures that the content is interpreted correctly without the need to provide further input or capabilities.

The management system M could be referred to also as a marketplace, which acts as a registry for component or platform descriptions and which provides a program functionality for platforms based on their platform descriptions.

In a second step 2 the second component C sends a request RQ, e. g. a discovery request, in order to search for components or platforms meeting its preferences, e.g. the provision of temperature values or free parking lots. If the first component P meets the discovery specification of the second component C then in a third step 3 the transformation description D is made available, e.g. transmitted, to the second component C.

The second component C comprises or can access a communication interface IFC for exchange of data with its environment.

Using the transformation description D a transformator F is produced which is used by a translating unit A.

The transformator F may be formed by a separate device or it may be formed by a transformation function that can be run on a variety of components of the network or be distributed across a plurality of components.

The translating or transformation unit A is for transforming the data such that from the "form" for a commonly known interface IFA they are adopted to the form for the first component's interface IFP.

As by the second component C data can be sent such as to conform to the commonly known interface IFA, then with the help of the translation unit A, data can be exchanged with the first component P.

The translating or transformation unit A may be formed by a separate device or a function that can be run on a variety of components of the network or be distributed across a plurality of components. In particular it may comprise executable code on the second component C or another device the second component C can communicate with.

Alternatively or additionally the transformation unit A can comprise source code that is provided to the second component C or another device or a plurality of other devices, where a compilation into executable code is performed. Thus the transformation unit A can be adopted to the requirements of the respective second component C.

Alternatively or additionally the transformation unit A can comprise or access a web service that can be deployed locally or remotely.

Hence the transformation unit A comprises at least a processing unit PU, a commonly known interface IFA and a specific interface IFP. Additionally it may at least comprise one or more other communication interfaces in order to communicate with a plurality of components.

Based on the transformation description D, in step 5, the transformation unit A modifies calls from the second component C to the commonly known interface IFA in that way that they can be forwarded syntactically correct to the interface IFP of first component P with the same semantical meaning.

Accordingly, the transformation unit A receives responses from the first component P in a sixth step 6 and transforms them to syntax and semantics of the expected return values of the interface IFA.

According to another embodiment the transformator F, preferably formed by a function, can be parameterized such by the second component C as to produce a specific translating unit A, which suits special requirements of C. For example, the second component C could parameterize the encoding, e.g. in XML, JSON, CVS, YAML, etc as examples of commonly used semi structured data formats used in the web.

Alternatively or additionally a structured format, a binary format or any other numerical representation could be used; also number representations, data formats, e.g. real or integer, or bindings could be parameterized.

A binding is understood as an actual realization of a web service with a protocol, e.g. a call using the "GET" command of the http protocol. An alternative to the http protocol used for devices with a low computational power are COAP, Websocket or MQTT, etc. as they are very compact protocols, i.e. using a limited set of commands.

One advantage of the above described embodiments is that it comprises a mechanism, which enables a consumer, e.g. of sensor data, to utilize an arbitrary IoT platform without prior knowledge of the specific formats and semantics of that platform.

Another advantage is that the description D may be re-used as e.g. different devices need to access a sensor and need therefore a transformation between the specific sensor interface and a commonly known interface. This is in particular an advantage for IoT systems with their huge variety of devices. To make use thereof the transformation description D can be shared through the management unit M, e.g. a public marketplace or registry, to be reused by many consumers or second devices C.

Another exemplary embodiment is described where the first component P is formed by a platform that offers temperature data and can be accessed through the interface IFP.

In this example the interface IFP is formed by an HTTP web-service with the URL http://platforml/services/temperature.

In order to retrieve temperature data for a circular geographic region, the specific interface IFP expects an HTTP POST command with the following XML body as **request:**

```
 <?xml version="1.0" encoding="UTF-8"?>
 <request>
 <latitude>48,09</latitude>
 <longitude>11,64</longitude>
 <radius>1000</radius>
 </request>
```

The above request serves only as exemplary embodiment of a request; a vast variety of requests in different languages, different forms, enquiring different parameters etc. is envisaged.

The body of the HTTP response, which serves as an exemplary embodiment of a response, containing temperature values, is an XML document as follows:

```
 <?xml version="1.0" encoding="UTF-8"?>
 <response>
 <data>296,65</data>
 <unit>Kelvin</unit>
 <time>20.06.2016 13:23</time>
 <latitude>48,0898</latitude>
 <longitude>11,6492</longitude>
 </response>
```

The problem which is to be addressed, is that an existing second component C, which is formed in this example by a consumer component C, e.g. a smart phone application for weather forecasts, is not capable of interacting with this interface, since it has been implemented for a different platform, hence it would send requests of a deviating form and would expect different responses.

In order to be able to interact with the first component P, the relevant communication interface IFC of the second component C would need to be adjusted. This would need to happen for all platforms or first components P it shall interact with. Especially in computer systems or networks comprising many different types of devices this establishes a tremendous amount of work.

To avoid those adaptation efforts, the relevant communication interface of the second component C can instead solely be adjusted to the commonly known interface IFA, e.g. a web interface as in the example below, or a programming interface, e.g. API (applied programming interface).

Therefore, for each platform to access, C retrieves the transformation description D that specifies the first component's P interface IFP from the management unit M.

Then, the transformator F is used to generate the translating unit A with the commonly known interface IFA that is known to the second component C.

In this example, the commonly known interface IFA can be accessed or called with an HTTP GET on the following URL:

```
 http://translator_for_platforml/access
 ?property=vocabulary:properties:airtemperature
 &lat=48.09
 &lng=11.64
 &areaShape=vocabulary:geo:circle
 &radiusMeters=1000
```

Thus, above a translation of the requirement of the second component C for the commonly known interface is described.

According to the exemplary embodiment the **response** is a JSON (Java Script Object Notation) formatted document as follows:

```
 {
 "type": "http://vocabulary/properties/airTemperature",
 "uom": "http://vocabulary/units/temperature/celsius",
 "value": 27.5,
 "timestamp": "2016-06-20T13:23+02:00",
 "latitude": 48.0898,
 "longitude": 11.6492
 }
```

Thus the data can be adopted to the format required by the commonly known interface.

In order to enable the translation from the HTTP GET call to the commonly known interface IFA, as shown above, to the HTML POST call with an XML payload as required by the interface IFP of the platform, the transformator F creates an according translating unit A using in the example the **following transformation description D:**

```
 {
 "baseUrl": "http://platform1/",
 "subUrl": "services/temperature",
 "protocol":"HTTP"
 "command":"POST"
 "requestMimeType":"application/xml"
 "responseMimeType":"application/xml"
 "templateRequest":"
 <?xml version="1.0" encoding="UTF-8"?>
 <request>
 <latitude>@@shape.lat@@</latitude>
 <longitude>@@shape.lng@@</longitude>
 <radius>@@shape.radius@@</radius>
 </request>
 ",
 "templateResponse":"
 <?xml version="1.0" encoding="UTF-8"?>
 <response>
 <data>@@value@@</data>
 <unit>@@uom@@</unit>
 <time>@@timestamp@@</time>
 <latitude>@@point.lat@@</latitude>
 <longitude>@@point.lng@@</longitude>
 </response>
 ",
 "@@value@@":
 {
 "type": "http://vocabulary/properties/airTemperature",
 "decimalFormat": "#,####",
 "dataType":" http://vocabulary/types/float"
 }
 "@@uom@@":
 {
 "type": "http://vocabulary/units/temperature/kelvin",
 }
 "@@point@@":{
 "type": "http://vocabulary/geo/point"
 "@@lat@@":
 {
 "type": "http://vocabulary/geo/latitude",
 "decimalFormat": "#,####",
 "dataType":" http://vocabulary/types/float"
 }
 "@@lng@@":
 {
 "type": "http://vocabulary/geo/longitude",
 "decimalFormat": "#,####",
 "dataType":" http://vocabulary/types/float"
 }
 }
 "@@shape@@":{
 "type": "http://vocabulary/geo/circle"
 "@@lat@@":
 {
 "type": "http://vocabulary/geo/latitude",
 "decimalFormat": "#,####",
 "dataType":" http://vocabulary/types/float"
 }
 "@@lng@@":
 {
 "type": "http://vocabulary/geo/longitude",
 "decimalFormat": "#,####",
 "dataType":" http://vocabulary/types/float"
 }
 "@@radius@@":
 {
 "type": "http://vocabulary/geo/shape/circle/radius",
 "uom": "http://vocabulary/units/length/meters"
 "decimalFormat": "#,####",
 "dataType":" http://vocabulary/types/float"
 }
 }
 "@@timestamp@@":
 {
 "type": "http://vocabulary/time/instant",
 "dateFormat": "dd.MM.yyyy hh:mm",
 "timeZone" : "GMT+2h"
 }
 }
```

The transformation description D is a priori created and made available via the management unit M for providing the necessary information for a transformation between the specific assigned communication interface IFP of the platform and the commonly known interface IFA in the transformation description D. Once the description D is made available by the management system M, it can be reused by many devices of the network.

The transformation description D includes fields, which describe the method how the specific assigned communication interface IFP of the first component P is accessed or called. In the exemplary embodiment of above, that is
- the URL (uniform resource locator), or generally the network address where the desired device, e.g. sensor, can be found;
- the protocol or generally the set of rules that allows communication between entities in a network. In the example above this can be found in "protocol":"HTTP" ;
- the templates of the expected form of requests and responses;
- the MIME types, i.e. the type of data in the body of a message, or generally information about the type of the exchanged data, e.g. string or real number etc. In the example above this can e.g. be found in "dataType":" http://vocabulary/types/float"
- the interpretation of the exchanged data, e.g. whether the value denotes temperature or a geographic latitude or/and whether it denotes temperature in Kelvin or degrees Celsius. This is mainly done in the "type" field which refer to an ontology, where the meaning of a parameter is explained, e.g. "type":"http://vocabulary/geo/longitude",

The message formats are described via templates. Known placeholders (between '@@' markers) describe where data is to be inserted in the request or data items can be read out from the response. Those placeholders are part of a limited set of terms, which are used for the transformation to the commonly known interface IFA.

Further, the description D contains meta information elements for each placeholder which describe how the data input which is to replace the placeholder has to be formatted.

Also, the meta information elements annotate each placeholder with semantics, e.g., it annotates the type of the placeholder 'value' with the semantic concept http://vocabulary/properties/airTemperature.
Another example is to connect the type of placeholder 'unit' with "http://vocabulary/units/temperature/kelvin"). This semantic annotation makes the placeholder machine-understandable, as the semantic concepts are part of a formally defined ontological vocabulary, that describes the data not only formally but indicates also their relationship to other data. Thus, all information can be used without further input in order to create a translation unit A.

In Fig. 2 an exemplary sequence of a data transmission is depicted. In a sending step S, data are sent across a specific interface IFP to an entity, where a transforming T of the data takes place, such as to conform to a commonly known interface IFA.

For transforming T a description D of the specific interface IFP from the perspective of a commonly known interface IFA is used.

In a receiving step R the data are received via the commonly known interface IFA.

Although the present invention has been described in accordance with preferred embodiments, it is obvious for the person skilled in the art that modifications or combination between the embodiments, fully or in one or more aspects, are possible in all embodiments. For purposes of explanation, specific protocols, numbers and configurations are set forth in order to provide a thorough understanding of the present invention. However, it will also be apparent to those skilled in the art that the present invention may be practiced without these specific details, in particular using alternative protocols and configurations.

Parts of the description have been presented in terms of operations performed by a computer system, using terms such as data, state, link, fault, packet, and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system; and the term computer system includes general purpose as well as special purpose data processing machines, routers, bridges, switches, and the like, that are standalone, adjunct or embedded.

Additionally, various operations have been described as multiple discrete steps in turn in a manner that is helpful in understanding the present invention. However, the order of description should not be construed as to imply that these operations are necessarily order dependent, in particular, the order of their presentation.

Further, the appearances of the phrase "in one embodiment" in various places in the specification are not necessarily all referring to the same embodiment.

Further according to the invention an embodiment is encompassed comprising the following modules:
A module for transmitting data between a first component and a second component of a network comprising the following modules:
   a) a sending or/and receiving receiving module prefereably cooperating with the first component P for sending or/and receiving data via a specific interface IFP of the first component P;
   b) a transforming module preferably cooperating with a transformation unit A, for transforming data conformed to the specific interface IFP such that they are adapted to a commonly known interface IFA and vice versa, whereby the transforming is performed solely based on a description D of the specific interface IFP of the first component P, said description comprising a syntactical and semantical information
   c) a receiving module R or/and sending module S preferably cooperating with the second component, for receiving or/and sending the thus transformed data using a common interface IFA.

Further according to the invention another embodiment is encompassed comprising a non-transitory computer program with a computer program code for executing on a processor, which, when executed on at least one computer, causes the processor to control communication services for transmitting data between a first component P and a second component C of a physical network, the computer program comprising:
a) program code for sending S or/and receiving R, by the first component P data via a specific interface IFP of the first component;
b) program code for transforming T, by a transformation unit A, data conformed to the specific interface IFP such that they are adapted to a commonly known interface IFA and vice versa, whereby the transforming is performed solely based on a description D of the specific interface IFP of the first component P, said description comprising a syntactical and semantical information and
c) program code for receiving R or/and sending S, by the second component C, the thus transformed data using a common interface IFA.

## Claims

1. Device (A) for transmitting data to a plurality of components (P, C), the device (A) having
- a common interface (IFA);
- at least one further interface (IFP) for exchanging data with a first component (P);
- a processing unit (PU), which is arranged such that
- a transformation of data conformed for the common interface (IFA) is performed such that the data are adapted for the at least one further interface (IFP) in regard to syntax and semantics and
- said transformation is performable solely by using a description (D) of the at least one further interface (IFP) of the first component (P) which comprises
- syntactical information and
- semantical information on the interpretation of the data.

2. Device (A) according to claim 1, wherein for said transformation in addition to the description (D) information from the second component (C) is considered, which specifies requirements of the second component (C).

3. Device (A) according to any of the previous claims wherein the syntactical description (D) comprises
- application information regarding an application which is to be used;
- protocol information about the protocol used by the first component (P) for the application which is to be used;
- templates of the form of requests and responses expected by the first component (P) for the application which is to be used;
- information about a data type or/and format of exchanged data via the requests and responses.

4. Device (A) according to any of the previous claims wherein the semantical information or/and the information about the interpretation of the exchanged data comprises a reference to a translating entity, in particular a list or ontology, wherein for a datum to be exchanged its meaning or/and relation to other data is described.

5. Device (A) according to any of the previous claims, wherein the semantical information denotes at least one of:
- a geographical position;
- a location information of the first component;
- a description of a physical entity;
- a reference point;
- a scale applied to the data.

6. Device (A) according to any of the previous claims, wherein the transformation is performed such that a transformator (F), in particular formed by a transforming function, is produced which is executable on the second component (C) or a further component (P) or/and a plurality of components or/and the device (A).

7. Device (A) according to any of the previous claims wherein the transformation is performed such that a source code is produced which can be adopted for a variety of components (C, P).

8. Device (A) according to any of the previous claims wherein the transformation is performed such that a web service is deployed locally on the second component (C) or remotely on another component or distributed across several components.

9. Device (A) according to any of the previous claims wherein the common interface (IFA) is a programming interface.

10. Device (A) according to any of the previous claims wherein the common interface (IFA) is a web interface.

11. Device (A) according to any of the previous claims 6 to 10 wherein the transformator (F) is formed by a transformation function and the transformation is performed such that the transformation function is applied on the description (D), whereby the transformation function is performed on the second component (C) or/and at least one other component of the network or/and the device (A).

12. Device (A) according to any of the claims 6 to 11 wherein the transformator (F) is formed by a transformation function is parameterized by the second component (C) according to requirements of the second component (C), in particular denoting a protocol, encoding, number representations, data formats or/and bindings.

13. Method for transmitting data between a first component (P) and a second component (C) of a network comprising the following steps:
a) sending (S) or/and receiving (R), by the first component (P) data via a specific interface (IFP) of the first component;
b) transforming (T), by a transformation unit (A), data conformed to the specific interface (IFP) such that they are adapted to a commonly known interface (IFA) and vice versa, whereby the transforming is performed solely based on a description (D) of the specific interface (IFP) of the first component (P), said description comprising a syntactical and semantical information;
c) receiving (R) or/and sending (S), by the second component (C), the thus transformed data using a common interface (IFA).

14. Piece of software for executing the steps of a method according to claim 13 when run on a computer.

15. Data Carrier for storing the piece of software according to claim 14.
